# EUROPÄISCHE PATENTSCHRIFT

(11) **EP 1 396 674 B1**
(45) Veröffentlichungstag und Bekanntmachung des Hinweises auf die Patenterteilung: **25.01.2006**
(21) Anmeldenummer: 03018987.2
(22) Anmeldetag: 21.08.2003
(51) Int. Cl.: F16L 55/163

(54) **Verfahren zum Abdichten von Leckagen in einem Rohr sowie Abdichtmittel**
Method of sealing leakages in a pipe and sealing means
Procédé pour rendre étanche des fuites dans un tuyau et élément d'étanchéité

(30) Priorität: 05.09.2002 DE 10240961
(43) Veröffentlichungstag der Anmeldung: 10.03.2004
(73) Patentinhaber: PAUL WURTH S.A., 1122 Luxembourg (LU); EKO Stahl GmbH, 15890 Eisenhüttenstadt (DE)
(72) Erfinder: Heinrich, Peter, Dr., 47608 Geldern (DE); Schauer, Claudius, 47053 Duisburg (DE); Buchwalder, Joachim, 15890 Fünfeichen (DE); Hunger, Jörg, Dr., 15898 Lawitz (DE)
(74) Vertreter: Freylinger, Ernest T.

(56) Entgegenhaltungen:
- DE-A- 3 507 393
- DE-A- 4 437 699
- US-A- 5 924 743

## Beschreibung

Die Erfindung betrifft ein Verfahren zum Abdichten von Leckagen in einem Rohr eines ein Medium führenden Rohrleitungssystems, insbesondere eines Rohrs in einem Kühlsystem für Schachtöfen, wobei die die Leckage verursachende schadhafte Stelle lokalisiert wird, ein Einsatz, der einen zur Rohrinnenwandung weisenden Dichtungskörper und / oder eine Dichtungsmasse sowie ein Federelement aufweist, unter Verringerung seines Umfangs gegen die Federkraft vorgespannt und in eine Aufnahmevorrichtung einer Montagevorrichtung geklemmt wird, dieser Einsatz im vorgespannten Zustand in den Rohrkanal mittels einer Positioniervorrichtung eingeführt und an der schadhaften Stelle platziert wird, der Einsatz arretiert wird und somit die schadhafte Stelle verschließt, indem das Federelement entspannt wird und sich der Einsatz gegen die Rohrinnenwandung verspannt sowie eine Vorrichtung zur Montage eines Abdichtmittels in einem Rohrkanal.

Zum Schutz der Wandung von Schachtöfen bzw. des Hochofenpanzers bei Hochöfen werden gegen die im Inneren herrschenden Temperaturen Kühlelemente, zum Beispiel die sogenannten Staves eingesetzt, die mit Kühlmittel, meist Wasser, beaufschlagt werden. Staves bestehen zum Beispiel aus einem Grundkörper aus einem gut wärmeleitenden Metall, in den Sackbohrungen als Kühlkanäle eingebracht sind. Diese Kühlkanäle sind mit Kühlmitteleintritts- und Kühlmittelaustrittsrohren verbunden, die wiederum mit einem entsprechenden Kühlmittelaufbereitungssystem verbunden sind. Bedingt durch die Einsatzbeanspruchung der Kühlelemente kann es zu Wärmedehnungen kommen, die in den Kühlmitteleintritts- bzw. den Kühlmittelaustrittsrohren bzw. den Zu- und Abführungsrohren, die über direkte oder indirekte, d.h. unbeabsichtigte Festpunkte am Panzer fixiert sind, zu Spannungsrissen und damit Leckagen führen, die problematisch sind.

Zum einen handelt es sich bei dem Kühlwasser um aufwendig aufbereitetes Kesselspeisewasser, dessen ständiger Verlust Kosten verursacht, und zum anderen kann das Leckwasser in den Hochofen gelangen, wo es den Reduktionsprozess Unkontrolliert beeinflusst und im ungünstigsten Fall die Kohlenstoffzustellung zerstört. Deshalb ist es erforderlich, Schäden bzw. Leckagen frühzeitig zu erkennen, zu lokalisieren und Lecks, wie Risse und Löcher, wieder abzudichten.

Zum Sanieren schadhafter Staves bzw. Abdichten der Risse und Löcher ist es nach einem betriebseigenen Stand der Technik bekannt, flexible Wellschläuche durch das gesamte Rohr, das die schadhafte Stelle aufweist, zu ziehen und den verbleibenden Hohlraum zwischen dem Wellschlauch und dem beschädigten Original - Kühlrohr mittels einer gut wärmeleitfähigen, anfänglich plastischen Masse zu verpressen. Die Masse härtet im Hohlraum aus und positioniert den Wellschlauch starr im Rohr.

Diese Sanierungsmethode ist mit hohem Montage- und Kostenaufwand verbunden. Zum einen bestehen die Wellschläuche aus Edelstahl, zum anderen sind separate Vorrichtungen zum Einfädeln des Wellschlauches in den Kühlkanal und spezielle Kupplungsteile zur Anbindung des Wellschlauches an das vorhandene Kühlsystem notwendig. Des weiteren werden separate Vorrichtungen zum Verpressen bzw. Abdichten des Hohlraumes zwischen Wellschlauch und Kühlrohr sowie spezielle Abdichtmassen mit besonderen Eigenschaften, wie Fließfähigkeit zur Hohlraumausfüllung und Aushärtung der Masse, benötigt.

Außerdem wird aufgrund des Wellschlauches die Wärmeleitfähigkeit im Bereich des sanierten Kühlkanals aufgrund des Hindernisses durch die Abdichtmasse und den Wellschlauch verringert, was zu einer Verungleichmäßigung der Gesamtwärmelast des kompletten Staves führt. Darüber hinaus liegt eine Querschnittsminderung des aufsteigenden Stranges im Bereich des Wellschlauches vor, die zu einer Erhöhung der Druckverluste im Kühlwasser führt, was letztendlich wieder zu einer Störung des gesamten Kühlsystems führen kann.

Aus der DE 35 07 393 A1 ist eine Vorrichtung zum Anbringen von Dichtungsmaterial an einer zylindrischen Innenwandung bekannt, wobei ein aus einem federelastischen Streifen in Zylinderform vorgespannter Federeinsatz durch eine Halteeinrichtung im aufgerollten Zustand festgehalten wird. Nach vorbereitendem Anlegen des verwendeten Dichtungsmaterials wird der Federeinsatz, dessen Außendurchmesser kleiner ist als der Innendurchmesser der Innenwandung, in diese eingeführt und schnellt nach Herausnehmen eines Sicherungsstiftes schlagartig mit starker Federkraft gegen die Innenwandung. Dadurch wird das Dichtungsmaterial gleichmäßig angepresst und seine nachträgliche Ablösung dauerhaft verhindert.

In der DE 44 37 699 A1 ist ein Verfahren zum Ausbessern eines Rohres beschrieben. Das Verfahren ist gekennzeichnet durch die Schritte:
- das Rohr wird gesäubert,
- ein spiralförmig gerolltes Ersatzrohr wird an die auszubessernde Stelle verbracht und
- das spiralförmig gerollte Ersatzrohr wird an die Wandung des auszubessernden Rohres angepresst.
   Weiterhin ist aus dieser Druckschrift ein Vorrichtung zur Montage eines Abdichtmitels bekannt.

Der Erfindung liegt die Aufgabe zugrunde, diese Nachteile zu beseitigen und die bekannten Verfahren und Vorrichtungen zu verbessern.

Diese Aufgabe wird mittels eines Verfahrens nach den Ansprüchen 1 bis sowie einer Montagevorrichtung zum Einbringen eines Abdichtmittels nach den Ansprüchen bis gelöst. Vorteilhafte Weiterentwicklungen sind jeweils in den Unteransprüchen beschrieben.

Verfahrensgemäß wird hierbei die Positioniervorrichtung und die Aufnahmevorrichtung für die Montage des Einsatzes ineinandergesteckt, indem eine an der Positioniervorrichtung angeordnete Abschiebeplatte an einer rückwärtigen Abschlussplatte der Aufnahmevorrichtung zur Anlage kommt und ein Distanzstab der Positioniervorrichtung sich durch die Aufnahmevorrichtung in Einführrichtung erstreckt, dass der Einsatz in die Aufnahmevorrichtung geklemmt wird und mittels der kombinierten Aufnahme- und Positioniervorrichtung in den Rohrkanal eingeführt wird, bis die freie Spitze des Distanzstabes auf ein Hindernis stößt, wie eine querverlaufende Kanalwand, und dass die Aufnahmevorrichtung sowie die Positioniervorrichtung nach Platzierung des Einsatzes nacheinander zurückgezogen werden.

Das Insert umfasst als wesentliche Komponenten ein Federelement und ein Dichtmittel in Form eines Dichtungskörpers, wie eines Gummistreifens, oder einer Dichtmasse. Sofern nur ein Dichtungskörper zum Einsatz kommt, sollte das gewählte Material, beispielsweise Gummi, relativ weich sein, um eine gute Abdichtung durch Überdeckung der schadhaften Stelle zu erreichen.

Die Dichtmasse kann unmittelbar auf das flächig ausgebildete Federelement aufgebracht werden. Wenn sich das Insert gegen die Rohrinnenwandung verspannt, dringt diese Dichtungsmasse zum einen in die schadhafte Stelle ein und dichtet diese sicher ab. Zum anderen dichtet die Dichtungsmasse auch den Hohlraum bzw. bei runden Rohrquerschnitten den Ringspalt zwischen dem verspannten Federelement und der Rohrinnenwandung ab.

Um den Abdichtungseffekt zu verstärken, besteht das Insert aus drei Komponenten. Hierzu wird der elastisch verformbare Dichtungskörper, der mit dem Federelement, beispielsweise durch Kleben verbunden ist, vor der Montage mit der pastösen Dichtungsmasse bestrichen.

Mit Hilfe dieses Sanierungsverfahrens bzw. des Abdichtmittels in Form eines Einsatzes bzw. Inserts aus einem Dichtungskörper, vorzugsweise einem Gummistreifen, und einem Federelement, vorzugsweise einer Flachspiralfeder, mit zusätzlicher äußerer Dichtungsmasse wird eine sichere und dauerhafte Abdichtung des Kühlrohrdefektes erzielt. Es wird eine Abdichtung bei Differenzdrücken von 1 bis 5 bar zwischen Ofeninnerem und Kühlwasser und bei Strömungsgeschwindigkeiten von 1,5 bis 2,1 m/s erreicht. Aufgrund des Federelementes und der in den Riss eingedrungenen Dichtungsmasse kann das Insert selbst auf zu erwartende Lageveränderungen im Rissbereich bzw. Relativbewegungen der Risskanten flexibel reagieren.

Insgesamt ist ein Insert preiswerter in der Herstellung als ein Edelstahl-Wellschlauch. Die Einsetzmethode ist ohne großen Aufwand und in der Praxis schnell und effektiv durchführbar.

Zudem wird aufgrund der nur lokal erfolgten Sanierung der defekten Stelle die Wärmeabfuhrleistung des Rohres geringstmöglich beeinflusst. Da der Dichtungskörper in Form eines Gummistreifens bzw. einer - platte sowie eine Flachspiralfeder und der Dichtspalt nur von sehr geringer Dicke sind, wird der Rohrkanalquerschnitt nur unwesentlich und nur auf einer sehr kurzen Strecke eingeengt. Damit sind die Beeinflussung des Strömungswiderstandes sowie die Druckverluste vernachlässigbar klein.

Um das erfindungsgemäße Insert gemäß dem vorgeschlagenen Sanierungsverfahren schnell und einfach sowie präzise an der schadhaften Stelle zu platzieren und zu arretieren, wird eine besondere Vorrichtung vorgeschlagen, die sich aus einer Aufnahmevorrichtung für das Insert und einer Positioniervorrichtung zusammensetzt, die zur Montage des Inserts vorzugsweise durch Ineinanderstecken verbunden werden. Diese Montagevorrichtung eignet sich für Rohre, die von außen ohne wesentliche Krümmungsverläufe zugänglich sind, wie die Kühlmitteleintritts- und Kühlmittelaustrittsrohre von Staves.

Weitere Einzelheiten und Vorteile der Erfindung ergeben sich aus den Unteransprüchen und aus der nachfolgenden Beschreibung, in der die in den Figuren dargestellten Ausführungsformen der Erfindung näher erläutert werden. Es zeigen:
- Fig.1: einen Längsschnitt eines Teils eines Cu-Staves mit einem Kühlmitteleintritts- bzw. -austrittsrohr und mit einer Montagevorrichtung für ein Insert während der Montage des Inserts an einer schadhaften Stelle im Rohr;
- Fig. 2: einen Querschnitt durch das Kühlmitteleintritts- bzw.- austrittsrohr an der schadhaften Stelle während der Montage des Inserts;
- Fig. 3: den Querschnitt nach Fig. 2 nach der Montage des Inserts;
- Fig. 4: eine Seitenansicht der Aufnahmevorrichtung der Montagevorrichtung;
- Fig.5: einen Querschnitt längs der Abschlussplatte der Aufnahmevorrichtung nach Fig. 4;
- Fig. 6: eine Seitenansicht der Positioniervorrichtung der Montagevorrichtung;
- Fig. 7: einen Querschnitt längs einer Abschiebeplatte der Positioniervorrichtung nach Fig. 7.

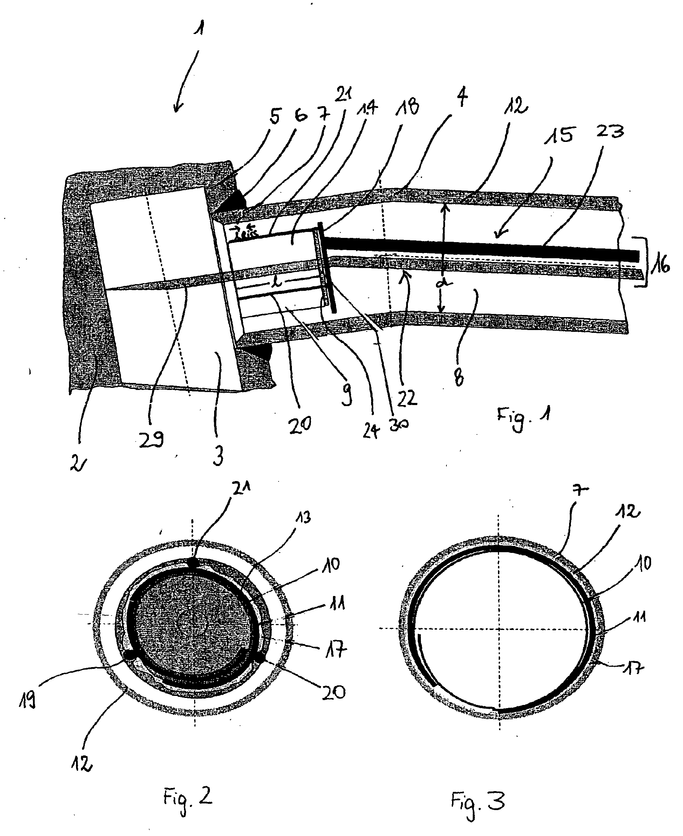

Fig. 1 zeigt den oberen Teil eines Staves 1, der bekanntermaßen aus einem beispielsweise gewalzten Grundkörper 2 aus Kupfer oder einer Kupferlegierung besteht, in den vertikal verlaufende Sackbohrungen als Kühlkanäle 3 eingebracht sind. Jeder Kühlkanal 3 oder einige Kühlkanäle gemeinsam werden durch Kühlmitteleintritts- und -austrittsrohre mit Kühlwasser gespeist, wobei hier eines dieser Rohre 4 dargestellt ist. Diese Rohre 4 sind an die Rückseite 5 des Cu-Staves 1 angeschweißt und verlaufen durch Öffnungen im Ofenpanzer. Die Kühlkanäle 3 sowie die Rohre 4 ergeben ein Rohrleitungssystem. Insbesondere an den Verbindungspunkten bzw. Schweißnähten 6 können sich schadhafte Stellen 7, wie Risse oder Löcher bilden, die wiederum zu Leckagen führen.

Diese Risse oder Löcher werden nach dem erfindungsgemäßen Sanierungsverfahren mit Hilfe eines Endoskops, das in den Rohrkanal 8 eingeführt wird, lokalisiert. Es sind auch andere zerstörungsfreie Lokalisierungsverfahren, wie Ultraschall- oder Röntgenverfahren, denkbar. Um diese Risse lokal verschließen zu können, wird ein Insert 9 in das Rohr 4 eingeführt und genau an der schadhaften Stelle 7 platziert und arretiert.

Das ringförmige Insert 9 selbst besteht bei der gezeigten bevorzugten Ausführungsform nach den Fig. 2 und 3 aus drei Komponenten, nämlich einem Federelement 10, einem elastisch verformbaren Dichtungskörper 11 sowie einer pastösen Dichtmasse 17. Auf die in Richtung Rohrinnenwand 12 weisende Oberfläche 13 einer Flachspiralfeder als bevorzugte Form des Federelements 10 ist der Dichtungskörper 11 in Form eines Gummistreifens oder eines Gummiträgers aufgeklebt. Das Insert 9 wird zusammengedrückt, in einen Verklemmbereich 14 einer Aufnahmevorrichtung 15 einer Montagevorrichtung 16 eingeschoben und mit einer pastösen Dichtmasse 17 eingestrichen. Um dies zu ermöglichen, weist der Verklemmbereich 14 eine dem Umfang des Inserts in etwa entsprechende Abschlussplatte 18 auf, an der - hier - drei in Einführrichtung weisende Zinken 19-21 befestigt sind. Diese sind im Winkel von 120° zueinander angeordnet. Die Zinken 19-21 definieren hierbei einen vorgespannten Umfang des Inserts 9, der kleiner als der Durchmesser d des Rohrkanals ist und erlauben ein Bestreichen des Dichtungskörpers. Der Verklemmbereich kann natürlich auch durch alle anderen Arten von Begrenzungsmitteln für das Insert gebildet werden, beispielsweise durch entsprechend geformte und zugeschnittene Blechstreifen an der Aufnahmevorrichtung 15.

Fig. 3 zeigt das Insert 9 im platzierten und durch Verspannung arretierten Zustand an der Rohrinnenwandung 12 des Rohres 4 an der Riss 7 behafteten Stelle. Durch Zurückziehen der Aufnahmevorrichtung 15 wird die Spiralfeder 10 entspannt und drückt den Gummistreifen 11 nebst Dichtungsmasse 17 gegen die Rohrinnenwandung 12.

Die Form der Spiralfeder 10 des Inserts 9 vor der Montage ist in etwa der Querschnittsform des Rohrkanalquerschnitts angepasst. Auf diese Weise kann das Insert 9 auch bei von der Kreisform abweichenden Rohren, wie elliptischen oder eckigen Rohren, optimal zur Anwendung kommen.

Das Längenmaß des Inserts 9 parallel zur Rohrmittenachse ist entsprechend der Länge bzw. dem Ausmaß der schadhaften Stelle 7 wählbar, indem beispielsweise unterschiedlich lange Inserts 9 vorliegen oder diese an der Baustelle zurecht geschnitten werden. Für den bei diesem Beispiel in Fig. 1 gezeigte Riss an der Schweißnaht 6 ist ein entsprechend kurzes Insert 9 ausreichend, um die Einflüsse auf die Wärmeableitung sowie insbesondere die Strömungsgeschwindigkeit des Kühlwassers gering zu halten.

Dieses Insert 9 wird mit einer speziellen Montagevorrichtung 16 in das Rohr 4 eingeführt und platziert. Diese Montagevorrichtung 16 , die neben der Fig. 1 im Einzelnen in den Fig. 4 bis 7 dargestellt ist, setzt sich aus der bereits erwähnten Aufnahmevorrichtung 15 und einer Positioniervorrichtung 22 zusammen, die zur Montage zusammengesteckt werden. Die Aufnahmevorrichtung 15 weist den Verklemmbereich 14 für das Insert 9 sowie bei im wesentlich geraden Rohrkanälen ein stabförmiges Führungsteil 23 auf.

Um eine genaue Positionierung zu gewährleisten, wird das Insert 9 mit seinem entgegen die Einführrichtung weisenden Ende 24 in Richtung der rückwärtigen Abschlussplatte 18 des Verklemmbereichs 14 zwischen die Zinken 19-21 geschoben. Auf der anderen Seite dieser Abschlussplatte 18 ist ein Ende 25 des stabförmigen Führungsteiles 23 angeschweißt. Am dem anderen Ende 26 des Führungsstabes ist ein Montage-Handgriff 27 befestigt.

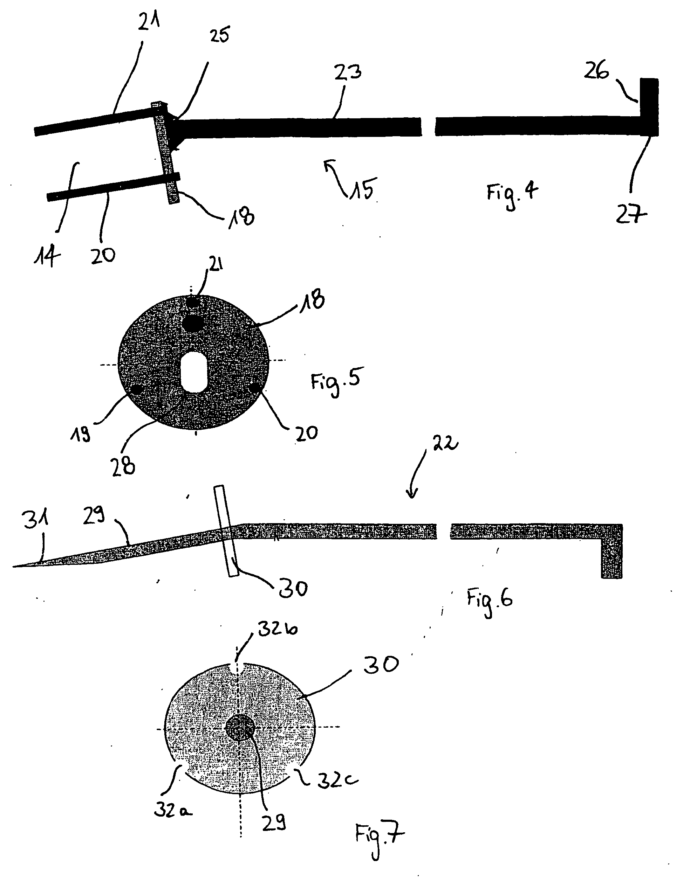

Mittels der in Fig. 5 dargestellten Abschlussplatte 18 wird die Anordnung der drei Zinken 19-21 zueinander deutlich. Im Wesentlichen mittig in die Platte 18 ist ein Langloch 28 eingebracht, durch das ein Distanzstab 29 der Positioniervorrichtung 22 steckbar ist. Auf diesem Distanzstab 29 oder Anschlag ist eine Abschiebeplatte 30 oder Abschiebeschild angeordnet (vgl. Fig. 6), die nach einer bevorzugten Ausführungsform entsprechend der lokalisierten schadhaften Stelle 7 vor der Montage entlang des Distanzstabes 29 verschoben werden kann.

Im zusammengeschobenen Zustand (vgl. Fig. 1) der Aufnahme- und der Positioniervorrichtung 15, 22 kommen die Abschiebeplatte 30 und die Abschlussplatte 18 in Anlage zueinander. Der Distanzstab 29 kann wie gezeigt ein spitz zulaufendes Ende 31 aufweisen. Die Abschiebeplatte 30 weist Einkerbungen 32 (a-c) für die Zinken 19-21 des Verklemmbereichs 14 auf, wie aus der Fig. 7 ersichtlich.

Nachfolgend wird das Montageverfahren mit Hilfe der Fig. 1 beschrieben. Zur Montage wird das von einer schadhaften Stelle 7 betroffene Rohr 4 mittels eines Putzknäuels oder anderer Hilfsmittel vorgetrocknet und grob gereinigt. Das im Verklemmbereich 14 in Vorspannung gehaltene Insert 9 wird mittels des Führungsstabes 23 in den Rohrkanal 8 eingeführt, bis das vordere Ende des Distanzstabes 31 an die Rohrinnenwand des querverlaufenden Kühlkanals 3 stößt. Von dem somit platzierten Insert 9 wird die Aufnahmevorrichtung 15 bzw. der Verklemmbereich 14 abgezogen, während das Insert 9 durch die Abschiebeplatte 30 festgehalten wird. Die in seine Ruhestellung strebende bzw. sich entspannende Spiralfeder presst den Gummistreifen mit der Dichtmasse 17 gegen die Rohrinnenwandung 12 an der schadhaften Stelle 7. Die Dichtmasse 17 dringt in den Riss ein und füllt diesen aus. Zudem wird auch ein möglicherweise verbliebener Hohlraum bzw. ein Ringspalt zwischen dem Gummistreifen und der Rohrinnenwandung 12 ausgefüllt. Gleiches gilt für Unebenheiten in der Rohrinnenwandung 12. Über die Federkraft hinaus wird die Arretierung des Inserts 9 durch Aushärtung der Dichtungsmasse 17 und somit einen gewissen Klebeeffekt sowie durch den zusätzlichen Anpressdruck aufgrund des Rohrinnendrucks unterstützt.

Aus dem so arretierten Insert 9 wird anschließend der Distanzstab 29 mit der Abschiebeplatte 30 herausgezogen. Der Sitz des installierten Inserts 9 kann über ein Endoskop (nicht gezeigt) kontrolliert und mit entsprechenden Hilfsmitteln (nicht gezeigt) begrenzt korrigiert werden, sofern notwendig.

Das vorgeschlagene Sanierungsverfahren, der Abdichtungskörper bzw. das Insert sowie die Montagevorrichtung können über den Einsatz von Rohren bzw. ggfs. Kühlkanälen der Kühlsysteme bei Staves hinaus auch bei allen anderen bekannten Rohren von Rohrleitungssystemen, die Medien, zum Beispiel zur Kühlung und zur Heizung, führen, zur Anwendung kommen. Die Rohrleitungen können bei lokalisierbaren Defekten in Form von Rissen und Löchern oder ähnlichen Fehlstellen effektiv und dauerhaft saniert werden. Der besondere Vorteil liegt darin, dass weder die Wärmeleitfähigkeit noch die Strömungs- bzw. Druckverhältnisse im Kühlsystem wesentlich beeinträchtigt werden. Die Installation des Inserts erfolgt ohne großen Aufwand. Es liegt eine ausreichende Flexibilität zur Aufnahme weiterer Bewegungsvorgänge an der schadhaften Stelle, wie dem Riss, vor.

### Bezugszeichenliste:

- 1: Stave
- 2: Stave-Grundkörper
- 3: Kühlkanäle
- 4: Kühlmittelaustritts- oder Kühlmitteleintrittsrohr des Staves
- 5: Rückseite
- 6: Schweißnähte
- 7: schadhafte Stellen
- 8: Rohrkanal
- 9: Einsatz, Insert
- 10: Federelement
- 11: Dichtungskörper
- 12: Rohrinnenwandung
- 13: Oberfläche einer Flachspiralfeder
- 14: Verklemmbereich
- 15: Aufnahmevorrichtung
- 16: Montagevorrichtung
- 17: Dichtmasse
- 18: Abschlussplatte
- 19: Zinken
- 20: Zinken
- 21: Zinken
- 22: Positioniervorrichtung
- 23: stabförmiges Führungsteil
- 24: entgegen die Einführrichtung weisendes Ende des Inserts
- 25: festes Ende des Führungsteils
- 26: anderes Ende des Führungsteils
- 27: Montagegriff
- 28: Langloch
- 29: Distanzstab
- 30: Abschiebeplatte
- 31: Ende des Distanzstabes
- 32: Einkerbungen in der Abschiebeplatte für die Zinken

- d: Durchmesser des Rohrkanals
- I: Länge des Inserts
- I_{Riss}: Länge des Risses

## Patentansprüche

1. Verfahren zum Abdichten von Leckagen in einem Rohr (4) eines ein Medium führenden Rohrleitungssystems, insbesondere eines Rohrs in einem Kühlsystem für Schachtöfen, wobei die die Leckage verursachende schadhafte Stelle (7) lokalisiert wird, ein Einsatz (9), der einen zur Rohrinnenwandung (12) weisenden Dichtungskörper (11) und / oder eine Dichtungsmasse (17) sowie ein Federelement (10) aufweist, unter Verringerung seines Umfangs gegen die Federkraft vorgespannt und in eine Aufnahmevorrichtung (15) einer Montagevorrichtung (16) geklemmt wird, dieser Einsatz (9) im vorgespannten Zustand in den Rohrkanal (8) mittels einer Positioniervorrichtung (22) eingeführt und an der schadhaften Stelle (7) platziert wird, der Einsatz (9) arretiert wird und somit die schadhafte Stelle (7) verschließt, indem das Federelement (10) entspannt wird und sich der Einsatz (9) gegen die Rohrinnenwandung (12) verspannt,
**dadurch gekennzeichnet,**
**dass** die Positioniervorrichtung (22) und die Aufnahmevorrichtung (15) für die Montage des Einsatzes (9) ineinandergesteckt werden, indem eine an der Positioniervorrichtung (22) angeordnete Abschiebeplatte (30) an einer rückwärtigen Abschlussplatte (18) der Aufnahmevorrichtung (15) zur Anlage kommt und ein Distanzstab (29) der Positioniervorrichtung (22) sich durch die Aufnahmevorrichtung (15) in Einführrichtung erstreckt,
**dass** der Einsatz (9) in die Aufnahmevorrichtung (15) geklemmt wird und mittels der kombinierten Aufnahme- und Positioniervorrichtung (15, 22) in den Rohrkanal (8) eingeführt wird, bis die freie Spitze (31) des Distanzstabes (29) auf ein Hindernis stößt, wie eine querverlaufende Kanalwand, und dass die Aufnahmevorrichtung (15) sowie die Positioniervorrichtung (22) nach Platzierung des Einsatzes (9) nacheinander zurückgezogen werden.

2. Verfahren nach Anspruch 1,
**dadurch gekennzeichnet,**
**dass** vor der Montage des Einsatzes (9) die schadhafte Stelle (7) endoskopisch lokalisiert und / oder nach der Montage des Einsatzes (9) dessen Sitz im Rohrkanal (8) endoskopisch geprüft wird.

3. Verfahren nach einem der Ansprüche 1 oder 2,
**dadurch gekennzeichnet,**
**dass** in Abhängigkeit der lokalisierten schadhaften Stelle (7) die Positioniereinrichtung (22) vor der Montage des Einsatzes (9) entsprechend eingestellt wird.

4. Vorrichtung zur Montage (16) eines Abdichtmittels in einem von außen ohne wesentliche Krümmung zugänglichen Rohr eines ein Medium führenden Rohrleitungssystems zum Abdichten von Leckagen, wie die Kühlmitteleintritts- und Kühlmittelaustrittsrohre (4) für die Kühlkanäle (3) eines Staves (1), diese eine Vorrichtung zur Aufnahme (15) des Abdichtmittels in Form eines Einsatzes (9) aufweist, deren Umfang kleiner ist als der Umfang des Rohrkanals (8) und somit den Einsatz (9) während des Einführens in den Rohrkanal (8) in einem vorgespannten Zustand hält, sowie eine Vorrichtung zur Positionierung (22) des Einsatzes (9) an einer schadhaften Stelle (7), die die Leckage verursacht, wobei die Positioniervorrichtung (22) ebenfalls durch den Rohrkanal (8) eingeführt wird und lösbar mit der Aufnahmevorrichtung (15) verbindbar ist, insbesondere durch diese steckbar ist,
**dadurch gekennzeichnet,**
**dass** die Aufnahmevorrichtung (15) einen Verklemmbereich (14) für den Einsatz (9) und ein stabförmiges Führungsteil (23) aufweist,
und der Verklemmbereich (14) eine rückwärtige Abschlussplatte (18) sowie mindestens zwei sich in Einführrichtung erstreckende Zinken (19) aufweist.

5. Vorrichtung nach Anspruch 4,
**dadurch gekennzeichnet,**
**dass** die Positioniervorrichtung (22) ein durch den ringförmigen Einsatz (9) sowie die Abschlussplatte (18) der Aufnahmevorrichtung (15) durchsteckbaren Distanzstab (29) sowie eine auf dem Distanzstab (29) angeordnete Abschiebeplatte (30) umfasst, das im zusammengesteckten Zustand der Aufnahme- und Positioniereinrichtung (15, 22) an der Abschlussplatte (18) auf ihrer in Einführrichtung weisenden Seite zur Anlage kommt.

## Claims

1. Method of sealing leakages in a pipe (4) of a pipe duct system conducting a medium, particularly a pipe in a cooling system for shaft furnaces, wherein the damaged location (7) causing the leakage is localised, an insert (9) comprising a sealing body (11) facing the pipe inner wall (12) and/or a sealing mass (17) as well as a spring element (10) is biased against the spring force under reduction of the insert circumference and clamped in a receiving device (15) of a mounting device (16), this insert (9) is introduced in biased state into the pipe channel (8) by means of a positioning device (22) and placed at the damaged location (7), the insert (9) is locked and thus the damaged location (7) closed, in that the spring element (10) is relaxed and the insert (9) clamped against the pipe inner wall (12), **characterised in that** the positioning device (22) and the receiving device (15) are plugged into one another for mounting of the insert (9) **in that** a pusher plate (30) arranged at the positioning device (22) comes into contact with a rearward closure plate (18) of the receiving device (15) and a spacer rod (29) of the positioning device (22) extends through the receiving device (15) in direction of introduction, that the insert (9) is clamped in the receiving device (15) and introduced by means of the combined receiving and positioning device (15, 22) into the pipe channel (8) until the free tip (31) of the spacer rod (29) hits against an obstruction, such as a transversely extending channel wall, and that the receiving device (15) as well as the positioning device (22) are withdrawn in succession after placing of the insert (9).

2. Method according to claim 1, **characterised in that** prior to mounting of the insert (9) the damaged location (7) is endoscopically localised and/or after mounting of the insert (9) the seat thereof in the pipe channel (8) is endoscopically checked.

3. Method according to one of claims 1 and 2, **characterised in that** prior to mounting of the insert (9) the positioning device (22) is correspondingly adjusted in dependence on the localised damaged location (7).

4. Device (16) for mounting a sealing means in a pipe, which is accessible from outside without significant curvature, of a pipe system conducting a medium, for sealing leakages, such as the coolant inlet and coolant outlet pipe (4) for the cooling channels (3) of a stave (1), this comprises a device (15) for reception of the sealing means in the form of an insert (9), the circumference of which is smaller than the circumference of the pipe channel (8) and thus holds the insert (9) in a biased state during introduction into the pipe channel (8), as well as a device (22) for positioning the insert (9) at a damaged location (7) causing the leakage, wherein the positioning device (22) is similarly introduced through the pipe channel (8) and is detachably connectible with the receiving device (15), in particular can be plugged through this, **characterised in that** the receiving device (15) has a clamping region (14) for the insert (9) and a rod-shaped guide part (23) and the clamping region (14) has a rearward closure plate (18) as well as at least two prongs (19) extending in direction of introduction.

5. Device according to claim 4, **characterised in that** the positioning device (22) comprises a spacer rod (29), which can be inserted through the annular insert (9) as well as the closure plate (18) of the receiving device (15), as well as a pusher plate (30), which is arranged on the spacer rod (29) and which in the plugged-together state of the receiving device (15) and positioning device (22) comes into contact with the closure plate (18) at the side thereof facing the direction of introduction.

## Revendications

1. Procédé pour étancher des fuites dans un tuyau (4) d'un système de conduites tubulaires menant un fluide, en particulier d'un tube dans un système de refroidissement pour des fours à puits, dans lequel on repère l'emplacement défectueux (7) causant la fuite, on met sous précontrainte un insert (9) qui comprend un corps d'étanchement (11) dirigé vers la paroi intérieure (12) du tube et/ou une pâte d'étanchement (17) ainsi qu'un élément ressort (10), en réduisant son périmètre à l'encontre de la force du ressort, et on serre ledit insert dans un dispositif de réception (15) d'un dispositif de montage (16), on introduit cet insert (9) dans l'état précontraint dans le canal tubulaire (8) au moyen d'un dispositif de positionnement (22) et on le place à l'emplacement défectueux (7), on bloque l'insert (9) qui referme alors l'emplacement défectueux (7) par détente de l'élément ressort (10) et par serrage de l'insert (8) contre la paroi intérieure (12) du tube,
**caractérisé en ce que**
l'on emboîte le dispositif de positionnement (22) et le dispositif de réception (15) l'un dans l'autre pour le montage de l'insert (9) du fait qu'une plaque de poussée (30) agencée sur le dispositif de positionnement (22) vient en appui contre une plaque de fermeture arrière (18) du dispositif de réception (15) et qu'un barreau écarteur (29) du dispositif de positionnement (22) traverse le dispositif de réception (15) en direction d'introduction,
l'on serre l'insert (9) dans le dispositif de réception (15) et on l'introduit dans le canal tubulaire (8) au moyen du dispositif combiné de réception et de positionnement (15, 22), jusqu'à ce que la pointe libre (31) du barreau écarteur (29) heurte contre un obstacle tel qu'une paroi de canal transversale, et **en ce que** l'on retire successivement le dispositif de réception (15) ainsi que le dispositif de positionnement (22) après avoir mis en place l'insert (9).

2. Procédé selon la revendication 1, **caractérisé en ce qu'**avant de monter l'insert (9), on repère l'emplacement défectueux (7) par voie endoscopique et/ou après avoir monté l'insert (9), on vérifie par voie endoscopique son assise dans le canal tubulaire (8).

3. Procédé selon l'une ou l'autre des revendications 1 et 2, **caractérisé en ce qu'**avant de monter l'insert (9), on règle en correspondance le dispositif de positionnement (22) en fonction de l'emplacement défectueux repéré (7).

4. Dispositif pour le montage (16) d'un moyen d'étanchement dans un tube accessible de l'extérieur sans coudage important d'un système de conduites tubulaires menant un fluide, destiné à étancher des fuites, tels que les tubes d'entrée et de sortie de réfrigérant (4) pour les canaux de refroidissement (3) d'une bâche de refroidissement (1), ledit dispositif comprenant un dispositif de réception (15) du moyen d'étanchement sous la forme d'un insert (9) dont le périmètre est inférieur au périmètre du canal tubulaire (8) et qui maintient donc l'insert (9) dans un état précontraint pendant l'introduction dans le canal tubulaire (8), ainsi qu'un dispositif de positionnement (22) de l'insert (9) à un emplacement défectueux (7) qui cause la fuite, le dispositif de positionnement (22) étant également introduit à travers le canal tubulaire (8) et étant susceptible d'être relié de façon détachable au dispositif de réception (15), en particulier en étant enfiché à travers ce dernier,
**caractérisé en ce que**
le dispositif de réception (15) présente une portion de serrage (14) pour l'insert (9) et une partie de guidage en forme de barreau (23), et **en ce que** la portion de serrage (14) comprend une plaque de fermeture arrière (18) ainsi qu'au moins deux dents (19) qui s'étendent en direction d'introduction.

5. Dispositif selon la revendication 4, **caractérisé en ce que** le dispositif de positionnement (22) comprend un barreau écarteur (29) susceptible d'être enfiché à travers l'insert annulaire (9) et à travers la plaque de fermeture (18) du dispositif de réception (15), ainsi qu'une plaque de poussée (30) agencée sur le barreau écarteur (29), plaque qui, dans l'état emboîté des dispositifs de réception et de positionnement (15, 22), vient en appui contre la plaque de fermeture (18) sur son côté dirigé en direction d'introduction.
